# EUROPEAN PATENT SPECIFICATION

(11) **EP 2 059 414 B1**
(45) Date of publication and mention of the grant of the patent: **23.02.2011**
(21) Application number: 07808773.1
(22) Date of filing: 24.08.2007
(51) Int. Cl.: B60R 9/10, B60R 9/048

(54) **METHOD AND FASTENING MEANS FOR CLAMPING A SUPPORT RAIL AT A LOAD CARRYING TUBE OF A BICYCLE CARRIER OF A VEHICLE**
VERFAHREN UND BEFESTIGUNGSMITTEL ZUM FESTKLEMMEN EINER STÜTZSCHIENE AN EINEM LASTTRAGROHR EINES FAHRRADTRÄGERS EINES FAHRZEUGS
PROCEDE ET MOYEN DE FIXATION POUR SERRER UN RAIL DE SUPPORT A UN TUBE DE SUPPORT DE CHARGE DU PORTE-BICYCLETTE D'UN VEHICULE

(30) Priority: 25.08.2006 SE 0601752
(43) Date of publication of application: 20.05.2009
(73) Proprietor: Thule Sweden AB, 330 33 Hillerstorp (SE)
(72) Inventor: ZWANENBURG, Guido, 9031 Drongen (BE)
(74) Representative: VALEA AB
(86) International application number: PCT/SE2007/000750
(87) International publication number: WO 2008/024053

(56) References cited:
- EP-A- 1 072 470
- EP-A- 1 442 940
- EP-A1- 0 894 672
- WO-A-90/02668
- WO-A-96/24509
- WO-A-2004/033258
- WO-A1-89/01884
- WO-A1-96/24509
- WO-A1-2004/024506
- WO-A1-2004/033258
- JP-A- 11 157 394
- US-B2- 6 681 971

## Description

### Technical field

The present invention concerns a method for clamping a load rail to a load carrying tube of a bicycle carrier of a vehicle, by means of a fastening means.

The present invention also concerns a fastening means for clamping of a load rail to a load carrying tube, comprising a shackle, intended to extend essentially around the load carrying tube, and a clamping means, intended to clamp the load carrying tube between the shackle and the clamping means.

### State of the art

A fastening means for clamping of accessories to a load carrier is previously known, for instance, through US 6681971 and comprising a bracket, which is intended to be clamped firmly around a load carrying tube and an upper recess for a mounting bolt or similar. Yet another fastening means is disclosed by document WO 90/02688.

The previously known fastening means works satisfactory, but has not proven itself suitable for clamping load rails to a bicycle carrier, as the placement of the load rail has depended on were the holes for the mounting bolts have been located.

### Problem

The problem with a fastening means of known kind is that it will not give a desired flexibility and that the cost for adopting the fastening means to different bicycle carriers becomes too high.

### Solution

The purpose with the present invention is to achieve a method for a more compact loading of bicycles on the bicycle carrier and to achieve a fastening means, which can be used for various bicycle carriers, and thereby provide a large flexibility on how the bicycle is located on the bicycle carrier, and to achieve a simple clamping of a load rail to the bicycle carrier.

The present invention overcomes the above mentioned disadvantages with a method of the initially mentioned kind which is characterised in that the fastening means initially is arranged slidably along the load rail and along the load carrying tube, wherein the load rail is displaceable along the load carrying tube and transverse to the load carrying tube to a desired position, and that a clamping means of the fastening means is controlled to an essentially simultaneous abutment against the load rail and against the load carrying tube for fixing these in relation to each other.

Preferably, at least two load rails are arranged on the load carrying tube and are displaced in relation to each other, whereby for example two bicycles directed away from each other may be located closer to each other, compared to a placement on two load rails arranged side by side.

The invention also concerns a fastening means of the initially mentioned kind which is characterised in that the fastening means has at least one to the load rail adapted guide integrated with the fastening means, wherein the load rail is clamped between the clamping means and the guide upon tightening of the clamping means.

According to a first embodiment, the fastening means comprises an elongated body, which at one end, by means of a hinge or similar, is pivotally attached to the shackle, and which at its other end has said clamping means, which is adapted to bring the shackle in a direction towards the body and clamping the load carrying tube between the shackle and a lower surface of the body, wherein an upper surface of the body, has said elongated guide, which is integrated with the body, and that the body, at least partly, is elastically deformable, wherein the body is deformed upon tightening of the clamping means, so that the load rail is fixed to the guide.

Suitably, the guide comprises two T-shaped guiding rails, which are adapted to be inserted into two corresponding C-shaped recesses in the load rail. Upon tightening of the clamping means, the upper surface of the body is at least partly in contact with the load rail, whereby it becomes wedged to the fastening means, between the upper surface and the guiding rails. Alternatively, each respective guiding rail abuts, upon tightening of the clamping means, against the restriction walls of each respective recess in the load rail, whereby it is wedged to the fastening means. Preferably, the body is located above and abuts essentially perpendicularly against the load carrying tube.

According to a second embodiment the guide extends along at least an elongated upper edge of the shackle and in that the clamping means comprising a wedge shaped device, which by means of a bolt is engaged with the load rail and the load carrying tube upon tightening of the clamping means, such that the load carrying tube is clamped between the shackle and a lower surface of the wedge shaped device and such that the load rail is clamped between the guide and an upper surface of the wedge shaped device, whereby the load rail and the load carrying tube are fixed in relation to each other.

### Brief description of the figures

A fastening means according to the present invention shall hereafter be described with reference to the enclosed figures, in which:
figure 1 is a schematic view in perspective of a fastening means according the present invention,
figure 2 is a schematic exploded view of the fastening means according to figure 1, with a load rail and a load carrying tube,
figure 3 is a schematic view in perspective of a load carrier with two load rails in a first position,
figure 4 is a schematic view in perspective of the load carrier according to figure 3 with the load rails in a second position, and
figure 5 is a schematic exploded view of an alternative designed fastening means, with a load rail and a load carrying tube.

### Preferred embodiment

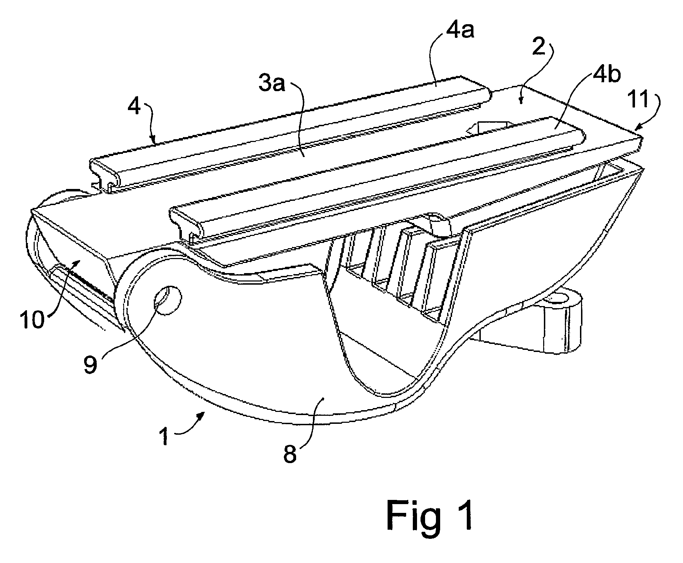

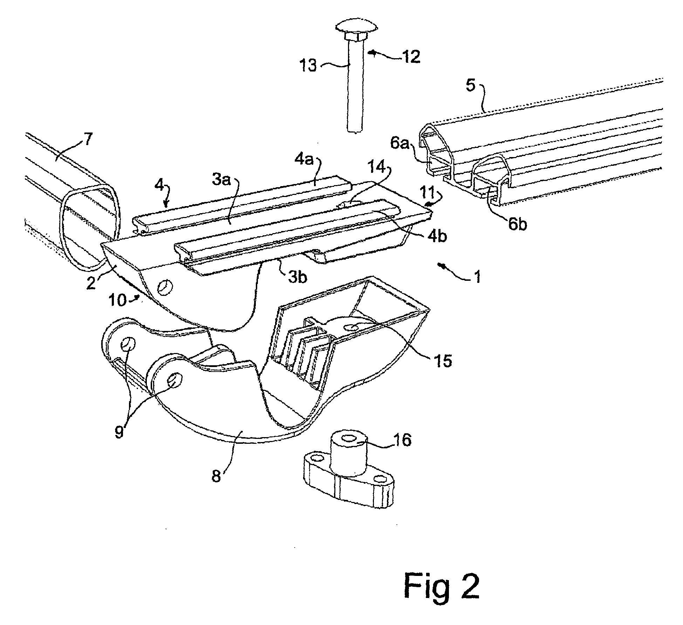

The fastening means 1, shown in figure 1 and 2, comprises an elongated body 2 of an elastic material, for instance a plastic material. The body 2 is formed in one piece with an essential flat upper surface 3a, on which surface at least one elongated guide 4, adopted to an in itself previously known load rail 5 being arranged. The load rail 5 is suitable made of aluminum or similar. In figure 1 and 2 said guide 4 being shown in the shape of two T-shaped guiding rails 4a and 4b, which are intended to be brought into two corresponding C-shaped recesses 6a and 6b in the load rail 5. Of course, it may be possible to utilise one or several guiding rails. It should also be possible that the guide 4 is in the shape of a recess, with suitable profile, and that the load rail 5 is provided with corresponding guiding rails.

The body I is likewise formed with a profiled lower surface 3b, which being adapted to an in itself previously known load carrying tube 7. The design of the lower surface 3b can naturally be adapted to different profiles of the load carrying tube 7, as an example, a circular or an oval or a rectangular shape. The essential is that the body 2 could be placed above and abutting essentially perpendicular against the load carrying tube 7.

The fastening means I also comprising a shackle 8, which by means of a hinge 9 is in a turnable way attached at one end 10 of the body 2, and at the other end 11 of the body 2 having a clamping means 12 to tighten together the body 2 and the shackle 8 around the load carrying tube 7. The clamping means 12 may consist of a bolt 13, which extends through a hole 14 at the other end 11 of the body 2 and through a hole 15 in the shackle 8 to a nut 16, which suitable is in the shape of a hand wheel or similar. Naturally, the clamping means 12 may be formed in other known ways, for instance, as a quick-grip of eccentric form or similar. The hinge 9 may as well be formed in other known ways, for instance, as appear from US 6681971.

The essential with the present invention is that the fastening means 1 in an unloaded condition, that is when the fastening means 1 is mounted on the load carrying tube 7, but before the clamping means 12 has been tighten, admits that the fastening means 1 can be moved along the load carrying tube 7 and that the load rail 5 can be moved backwards and forwards along the fastening means 1. At tightening of the clamping means 12, the shackle 8 is brought in direction against the body 2, wherein the load carrying tube 7 being firmly clamped between the shackle 8 and the lower surface 3b of the body 2. Simultaneously, the clamping force, acting between the hinge 9 at one end 10 of the body 2, and the hole 14 at the other end 11 of the body 2, will cause a deflection or elastic deformation of the elongated body 2. The upper surface 3a of the body 2 will, at least partly, come into contact with the load rail 5, where said load rail will be firmly wedged between the upper surface 3a and the guiding rails 4 of the fastening means 1. It is also possible to design the guiding rails 4a and 4b, respective, which are integrated with the body 2, to bending out to abutment against the upper and lower boundary walls of the recesses 6a and 6b, respective, in the load rail 5.

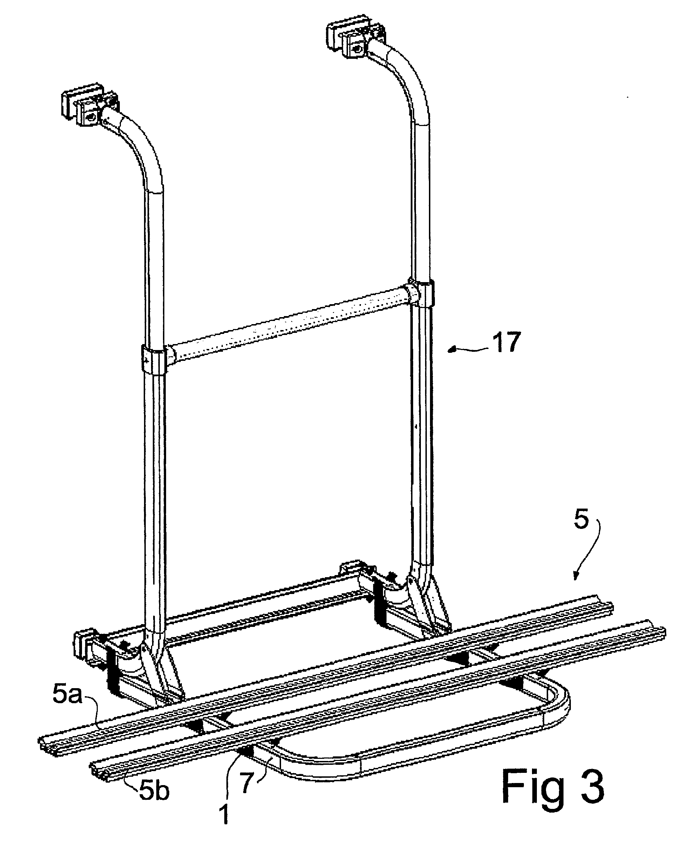

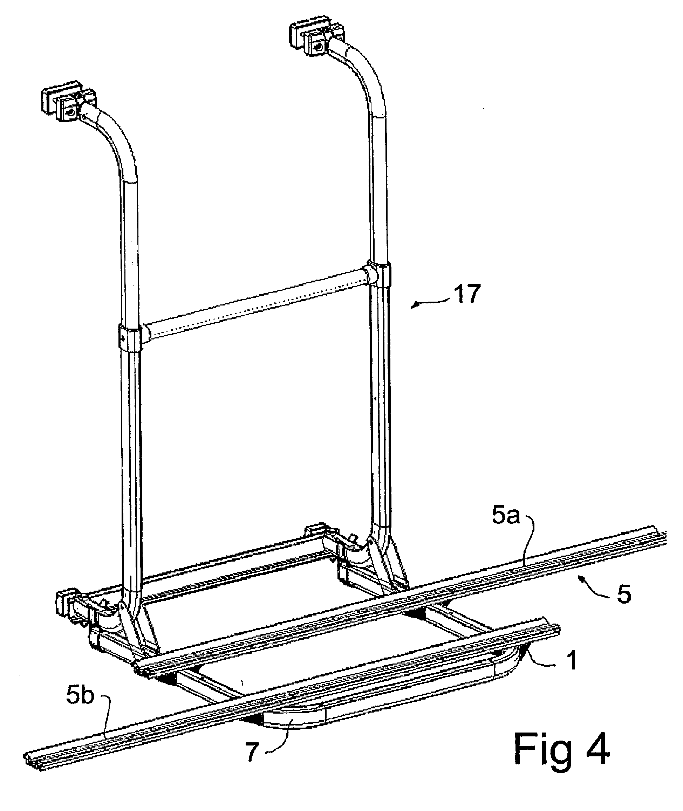

In figure 3 and 4 a bicycle carrier 17 being shown, that is intended to be mounted at a vehicle (not shown). The bicycle carrier 17 comprises a load carrying tube 7, of the above mentioned kind, which extends in an arc-shape, out of the bicycle carrier 17, and two load rails 5a and 5b. The load rails 5a and 5b are intended to be fastened at the load carrying tube 7 by aid of said fastening means.

In figure 3, the load rails 5a and 5b are arranged parallel and relatively close to each other, which can be sufficient at transportation of one or two standard bicycles. At larger bicycles or at transportation of bicycles having luggage, it can be desirable to achieve more space for the bicycles on the bicycle carrier 17. This is possible with the present invention, and as will be seen from figure 4 the load rails 5a and 5b may, for instance, be displaced relative each other and the distance between the load rails 5a and 5b can also become increased. It is also easy, when required, to introduce a third load rail (not shown).

By displacing the load rails 5a and 5b relatively each other an extra space can also be provided, for example for locating two bicycles directed from each other closer each other, compared with a placement on two adjacent each other arranged load rails. It will hereby become possible to load the bicycles more compact compared to known bicycle carriers.

It is also an advantage that a load being displaced towards the vehicle, which will reduce the lever that acts on the vehicle.

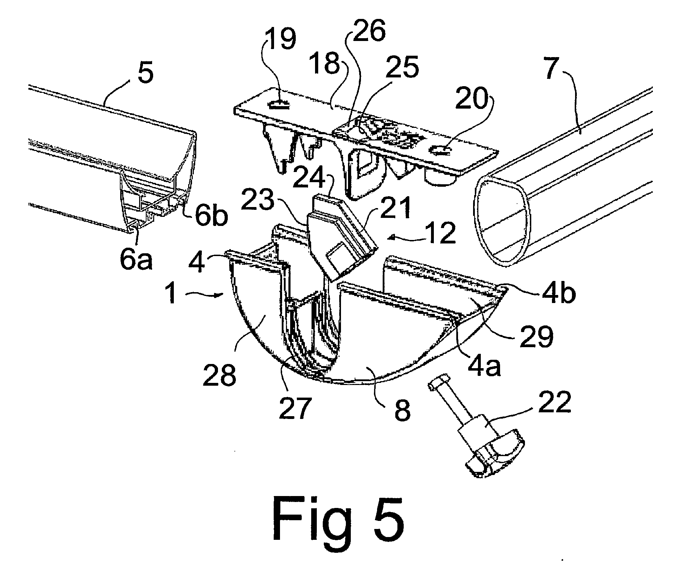

In figure 5, an alternative shaped fastening means 1 is shown and corresponding details have been marked with equal reference numerals as in the other figures. The fastening means 1 is intended for clamping of a load rail 5 at a load carrying tube 7 and comprising a shackle 8 in shape of a semicircular double-walled housing with a recess 27, which is intended to extend essentially around the load carrying tube 7. An upper cover 18 is fasten at the shackle 8 with bolts or similar (not shown), which extends through the holes 19 and 20. The load carrying tube 7 being clamped between the shackle 8 and a clamping means 12. The fastening means 1 having at least one guide 4, adopted to the load rail 5, and integrated with the fastening means 1, whereby the load rail 5 being clamped between the clamping means 12 and the guide 4 at tightening of the clamping means 12.

A guide 4a and 4b is suitably integrated with respective sidewall 28 and 29 of the shackle 8 and extends along at least one elongated upper edge of the shackle 8. The clamping means 12 comprising a wedge shaped device 21, which can be operated back and forth by aid of a bolt 22. The wedge shaped device 21 can extend through the hole 25 and the opening 26 of the upper cover 18. At tightening of the clamping means 12 the wedge shaped device 21 is brought into engagement with the load rail 5 and the load carrying tube 7, such that the load carrying tube 7 being clamped between a the shackle 8 and a lower surface 23 of the wedge shaped device 21, and such that the load rail 5 being clamped between the guide 4 and an upper surface 24 of the wedge shaped device 21, whereby the load rail 5 and the load carrying tube 7 being fixed relatively each other.

In figure 5, said guide 4 being shown in shape of two L-shaped guiding rails 4a and 4b, which are intended to be introduced into two corresponding L-shaped recesses 6a and 6b in the load rail 5. Naturally, it would be possible to utilize one or several guiding rails. It should also be thinkable that the guide 4 is in shape of a recess, with suitable profile, and that the load rail 5 having a corresponding guiding rail.

An advantage with this alternative embodiment of the fastening means 1 is that the parts will keep together even though the clamping means 12 is not tightened or if the bolt 22 loosens.

Another alternative embodiment of the fastening means is that the device according figure 5 being used, but the lock being excluded and that the clamping means is in the shape of a bolt or a quick-clamp, comprising an eccentric lever, arranged from beneath of the shackle and directly acting towards the load carrying tube. The load carrying tube would in such case abut directly against the load rail and at tightening of the clamping means being clamped against this.

## Claims

1. Fastening means (1) for clamping a load rail (5) to a load carrying tube (7), the fastening means (1) comprising
a shackle (8), adapted to extend essentially around the load carrying tube (7),
a clamping means (12), adapted to clamp the load carrying tube (7) between the shackle (8) and the clamping means(12),and
at least one guide (4) adapted to the load rail (5) and integrated with the fastening means (1), wherein
the clamping means (12) and the guide (4) are adapted to clamp the load rail (5) between the clamping means (12) and the guide (4) upon tightening of the clamping means (12)
**characterized in that**
the clamping means (12) comprises a wedge shaped device (21), which by means of a bolt (22) is engaged with the load rail and the load carrying tube upon tightening of the clamping means (12).

2. Fastening means (1) according to claim 1, wherein the guide (4) extends along at least an elongated upper edge of the shackle (8) and in that the wedge shaped device (21) is adapted to be engaged with the load rail (5) and the load carrying tube (7) by means of a bolt (22) upon tightening of the clamping means (12), such that the load carrying tube (7) is clamped between the shackle (8) and a lower surface (23) of the wedge shaped device (21), and such that the load rail (5) is clamped between the guide (4) and an upper surface (24) of the wedge shaped device (21), whereby the load rail (5) and the load carrying tube (7) are fixed in relation to each other.

3. Fastening means (1) according to claim 2, wherein the guide (4) comprises two L-shaped guiding rails (4a, 4b), which are adapted to be inserted into two corresponding L-shaped recesses (6a, 6b) in the load rail (5).

4. A bicycle carrier comprising a load carrying tube (7) and a load rail (5)
**characterized in that**
the bicycle carrier further comprises a fastening means (1) according to any one of claims 1 - 3.

5. The bicycle carrier according to claim 4, wherein that the bicycle carrier comprises two load rails (5) arranged on the load carrying tube (7) and adapted to be displaced in relation to each other, for compact loading of two bicycles on the bicycle carrier.

## Patentansprüche

1. Befestigungsmittel (1) zum Einklemmen einer Lastschiene (5) an ein eine Last tragendes Rohr (7), wobei die Befestigungsmittel (1) umfassen
einen Bügel (8), welcher derart ausgestaltet ist, dass er sich im Wesentlichen um das eine Last tragende Rohr (7) herum erstreckt,
Klemmmittel (12), welche derart ausgestaltet sind, dass sie das eine Last tragende Rohr (7) zwischen dem Bügel (8) und den Klemmmitteln (12) einklemmen, und
mindestens eine Führung (4), welche an die Lastschiene (5) angepasst ist und mit den Befestigungsmitteln (1) ganzheitlich ausgestaltet ist,
wobei die Klemmmittel (12) und die Führung (4) derart ausgestaltet sind, dass sie die Lastschiene (5) zwischen den Klemmmitteln (12) und der Führung (4) einklemmen, wenn die Klemmmittel (12) befestigt sind,
**dadurch gekennzeichnet,**
**dass** die Klemmmittel (12) eine keilförmige Vorrichtung (21) umfassen, welche sich mittels eines Bolzens (22) mit der Lastschiene und dem eine Last tragenden Rohr in Eingriff befindet, wenn die Klemmmittel (12) befestigt sind.

2. Befestigungsmittel (1) nach Anspruch 1, **dadurch gekennzeichnet, dass** sich die Führung (4) zumindest entlang einer länglichen oberen Kante des Bügels (8) erstreckt und dass die keilförmige Vorrichtung (21) derart ausgestaltet ist, dass sie sich mittels eines Bolzens (22) mit der Lastschiene (5) und dem eine Last tragenden Rohr (7) in Eingriff befindet, wenn die Klemmmittel (12) befestigt sind, so dass das eine Last tragende Rohr (7) zwischen dem Bügel (8) und einer unteren Oberfläche (23) der keilförmige Vorrichtung (21) eingeklemmt ist und so dass die Lastschiene (5) zwischen der Führung (4) und einer oberen Oberfläche (24) der keilförmigen Vorrichtung (21) eingeklemmt ist, wobei die Lastschiene (5) und das eine Last tragende Rohr (7) in einer Relation zueinander befestigt sind.

3. Befestigungsmittel (1) nach Anspruch 2, **dadurch gekennzeichnet, dass** die Führung (4) zwei L-förmige Führungsschienen (4a, 4b) umfasst, welche derart ausgestaltet sind, dass sie in zwei entsprechende L-förmige Vertiefungen (6a, 6b) in der Lastschiene (5) einzuführen sind.

4. Fahrradträger, welcher ein eine Last tragendes Rohr (7) und eine Lastschiene (5) umfasst,
**dadurch gekennzeichnet,**
**dass** der Fahrradträger darüber hinaus Befestigungsmittel (1) nach einem der Ansprüche 1-3 umfasst.

5. Fahrradträger nach Anspruch 4, **dadurch gekennzeichnet, dass** der Fahrradträger zwei Lastschienen (5) umfasst, welche auf dem eine Last tragenden Rohr (7) angeordnet sind und derart ausgestaltet sind, dass sie in Relation zueinander zu versetzen sind, um zwei Fahrräder auf dem Fahrradträger raumsparend zu tragen.

## Revendications

1. Moyens de fixation (1) pour bloquer un rail de chargement (5) sur un tube de support de charge (7), les moyens de fixation (1) comprenant :
une manille (8) adaptée pour s'étendre essentiellement autour du tube de support de charge (7),
des moyens de serrage (12) adaptés pour bloquer le tube de support de charge (7) entre la manille (8) et les moyens de serrage (12), et
au moins un guide (4) adapté sur le rail de chargement (5) et intégré avec les moyens de fixation (1), dans lesquels :
les moyens de serrage (12) et le guide (4) sont adaptés pour bloquer le rail de chargement (5) entre les moyens de serrage (12) et le guide (4) suite au serrage des moyens de serrage (12),
**caractérisés en ce que** :
les moyens de serrage (12) comprennent un dispositif en forme de cale (21), qui au moyen d'un boulon (22), est mis en prise avec le rail de chargement et le tube de support de charge après le serrage des moyens de serrage (12).

2. Moyens de fixation (1) selon la revendication 1, dans lesquels le guide (4) s'étend le long d'au moins un bord supérieur allongé de la manille (8) et en ce que le dispositif en forme de cale (21) est adapté pour être mis en prise avec le rail de chargement (5) et le tube de support de charge (7) au moyen d'un boulon (22) suite au serrage des moyens de serrage (12), de sorte que le tube de support de charge (7) est bloqué entre la manille (8) et une surface inférieure (23) du dispositif en forme de cale (21), et de sorte que le rail de chargement (5) est bloqué entre le guide (4) et une surface supérieure (24) du dispositif en forme de cale (21), moyennant quoi le rail de chargement (5) et le tube de support de charge (7) sont fixés l'un par rapport à l'autre.

3. Moyens de fixation (1) selon la revendication 2, dans lequel le guide (4) comprend deux rails de guidage en forme de L (4a, 4b) qui sont adaptés pour être insérés dans deux évidements en forme de L (6a, 6b) correspondants dans le rail de chargement (5).

4. Porte-vélos comprenant un tube de support de charge (7) et un rail de chargement (5) **caractérisé en ce que** :
le porte-vélos comprend en outre des moyens de fixation (1) selon l'une quelconque des revendications 1 à 3.

5. Porte-vélos selon la revendication 4, dans lequel le porte-vélos comprend deux rails de chargement (5) agencés sur le tube de support de charge (7) et adaptés pour être déplacés l'un par rapport à l'autre, pour le chargement compact de deux vélos sur le porte-vélos.
